# EUROPEAN PATENT APPLICATION

(11) **EP 4 628 206 A1**
(43) Date of publication of application: **08.10.2025**
(21) Application number: 23900552.3
(22) Date of filing: 30.11.2023
(51) Int. Cl.: B01J 20/281, B01J 20/285, G01N 30/02, G01N 30/88

(54) **AMINO ACID ANALYSIS SYSTEM AND AMINO ACID ANALYSIS METHOD**

(30) Priority: 04.12.2022 JP 2022193860
(71) Applicant: National University Corporation Kumamoto University, Kumamoto 860-8555 (JP)
(72) Inventor: OHIRA, Shin-ichi, Kumamoto-shi, Kumamoto 860-8555 (JP); TODA, Kei, Kumamoto-shi, Kumamoto 860-8555 (JP)
(74) Representative: Hasegawa, Kan
(86) International application number: PCT/JP2023/042866
(87) International publication number: WO 2024/122437

(57) **Abstract**

There is provided an amino acid analysis system capable of continuously monitoring a target amino acid as a target without requiring advanced pretreatment and an expensive analyzer. An amino acid analysis system 10 has: an amino acid separation device 1 including a sample solution flow path 11 through which a sample solution containing a plurality of amino acids flows, an extraction liquid flow path 13 provided adjacent to the sample solution flow path 11 across a separation membrane 12 including a molecular imprinted membrane that selectively causes the target amino acid to permeate, a pair of electrodes 14a and 14b sandwiching the sample solution flow path 12 and the extraction liquid flow path 13, and a DC power supply 5 that generates a predetermined potential difference between the electrodes 14a and 14b; a sample solution supply device 2 that supplies a sample solution to the sample solution flow path 12; an extraction liquid supply device 3A that supplies an extraction liquid 13 to the extraction liquid flow path; and an analyzer 4 that continuously detects a target amino acid contained in the extraction liquid discharged through the extraction liquid flow path 13.

## Description

### Technical Field

### Citation of Related Application

The present application claims the benefit of and priority to Japanese Patent Application (JP 2022-193860) filed on December 4, 2022. Priority is expressly claimed to the foregoing patent application, the entire disclosure of which is incorporated herein by reference for all purposes.

The present invention relates to an amino acid analysis system and an amino acid analysis method.

### Background Art

Analysis of amino acids is widely performed in quality control of foods and pharmaceuticals, medical diagnosis, and the like. In particular, in medical diagnosis, methods based on the balance of several amino acids have been proposed, and there is a high need for monitoring of amino acids in blood.

In the related art, as an amino acid analysis method, an amino acid automatic analyzer using a separation column has been widely used (for example, Patent Document 1). The amino acid automatic analyzer is an apparatus in which amino acids are separated by liquid chromatography (HPLC), and then chemically modified with ninhydrin, ortho-phthalaldehyde (OPA), or the like into compounds having a UV absorption property or fluorescence to be detected, and can analyze several tens of types of amino acids at once; however, pretreatment is essential and a time of about 100 minutes is required.

In addition, in recent years, there has been an increasing need to rapidly analyze only a specific amino acid, and the time has been shortened by devising separation conditions.

In response to the need for rapid analysis of amino acids, methods for measuring amino acids using an analysis system combining ultra-high performance liquid chromatography (HPLC) and a mass spectrometer have been reported (for example, Patent Documents 2 and 3). In such amino acid analysis systems, separation and detection of 20 types of amino acids in a short period of time are realized by using a mass spectrometer. However, the mass spectrometer is expensive, and cannot be widely used as a general-purpose amino acid analysis system.

In addition, in a case where the measurement target is a sample such as a beverage containing impurities or fine particles, pretreatment for removing the impurities or fine particles is indispensable when the sample is introduced into a separation column filled with a resin used for HPLC, and thus the substantial analysis time is about several tens of minutes.

As described above, the amino acid automatic analyzer requires a long period of time, advanced pretreatment, and an expensive analyzer, and thus is disadvantageous in terms of time and cost.

Meanwhile, an amino acid analysis method by an "enzymatic method" is also known in which only an amino acid as a target (target amino acid) is detected by using an enzyme that decomposes only a specific amino acid (for example, Patent Document 4). In an enzymatic method in which hydrogen peroxide generated by a decomposition reaction by an enzyme is detected, there are many problems such as selectivity of the enzyme, activity of the enzyme at the time of measurement, and selectivity in detection of hydrogen peroxide generated by an enzymatic reaction.

There is also a constant need for an enzymatic method that can rapidly quantify only an aimed amino acid without pretreatment, and the search for an optimal enzyme and a reaction system is still ongoing to improve selectivity and sensitivity. However, there is a problem in that the substrate specificity of the enzyme, that is, the selectivity and the enzyme activity change depending on the storage state.

On the other hand, the present applicant has disclosed an analysis system of dissolved ions as a dissolved ion handling technique utilizing migration by an electric field and membrane permeation (Patent Document 5). The analysis system measures dissolved ions after performing pretreatment for dissolved ion analysis using a pretreatment device. The pretreatment device includes a sample solution flow path through which a sample solution containing dissolved ions to be measured flows, an extraction liquid flow path provided adjacent to the sample solution flow path across a dialysis membrane, a pair of electrodes provided sandwiching the sample solution flow path and the extraction liquid flow path, and a DC power supply that generates a predetermined potential difference between the pair of electrodes. However, even in a case where the analysis system is used, it is not possible to separate and detect only the target amino acid as a target.

### Citation List

### Patent Documents

Patent Document 1: JP 2011-69675 A
Patent Document 2: JP 5517931 B
Patent Document 3: JP 2016-191721 A
Patent Document 4: JP 2012-210191 A
Patent Document 5: JP 5888653 B

### Summary of Invention

### Technical Problem

As described above, in the amino acid analysis method in the related art, it is difficult to continuously monitor a target amino acid as a target without requiring advanced pretreatment and an expensive analyzer.

Under such circumstances, an object of the present invention is to provide an amino acid analysis system and an amino acid analysis method capable of continuously monitoring a target amino acid. Another object of the present invention is to provide an amino acid separation device suitable for the amino acid analysis system.

### Solution to Problem

As a result of intensive studies to solve the above problems, the present inventors have found that the following aspects of the invention meet the above-described objects, thereby completing the present invention.

That is, the present invention relates to the following aspects.
<1> An amino acid analysis system for continuously detecting a target amino acid contained in a sample solution containing a plurality of amino acids, the amino acid analysis system including:
   an amino acid separation device including
   a sample solution flow path through which the sample solution flows,
   an extraction liquid flow path provided adjacent to the sample solution flow path across a separation membrane including a molecular imprinted membrane that selectively causes the target amino acid to permeate,
   a pair of electrodes provided sandwiching the sample solution flow path and the extraction liquid flow path, and
   a DC power supply that generates a predetermined potential difference between the pair of electrodes;
   a sample solution supply device that supplies a sample solution to the sample solution flow path of the amino acid separation device;
   an extraction liquid supply device that supplies an extraction liquid to the extraction liquid flow path of the amino acid separation device; and
   an analyzer that continuously detects a target amino acid contained in the extraction liquid discharged through the extraction liquid flow path of the amino acid separation device.
<2> The amino acid analysis system according to <1>, wherein the molecular imprinted membrane is formed of a polymer including a molecular template having a three-dimensional structure complementary to a three-dimensional structure of the target amino acid.
<3> The amino acid analysis system according to <2>, wherein the polymer is a polymer of a monomer having a functional group that interacts with the target amino acid.
<4> The amino acid analysis system according to <3>, wherein the monomer is 2-(dimethylamino)ethyl methacrylate.
<5> The amino acid analysis system according to any one of <1> to <4>, wherein the target amino acid is any one selected from the group consisting of aspartic acid, threonine, serine, asparagine, glutamic acid, glutamine, glycine, alanine, citrulline, valine, cystine, methionine, isoleucine, leucine, tyrosine, phenylalanine, γ-aminobutyric acid, lysine, and histidine.
<6> The amino acid analysis system according to any one of <1> to <5>, wherein the target amino acid is any one selected from the group consisting of glutamic acid, valine, leucine, and methionine.
<7> The amino acid analysis system according to any one of <1> to <6>, wherein the separation membrane includes a base membrane and the molecular imprinted membrane covering one surface or both surfaces of the base membrane.
<8> The amino acid analysis system according to <7>, wherein the base membrane is a dialysis membrane formed of cellulose or a cellulose derivative.
<9> The amino acid analysis system according to <7> or <8>, wherein the molecular imprinted membrane covering one surface or both surfaces of the base membrane has a multilayer structure.
<10> The amino acid analysis system according to any one of <1> to <9>, wherein each of the pair of electrodes provided in the extraction liquid flow path is provided with an electrode diaphragm on a front surface thereof.
<11> The amino acid analysis system according to any one of <1> to <10>, wherein two or more of the amino acid separation devices are connected in series.

<1A> An amino acid analysis method, including analyzing a target amino acid using the amino acid analysis system described in any one of <1> to <11>.
<2A> The amino acid analysis method according to <1A>, wherein the target amino acid is continuously monitored and analyzed.
<1B> An amino acid separation device for separating a target amino acid contained in a sample solution containing a plurality of amino acids, the amino acid separation device including:
   a sample solution flow path through which the sample solution flows;
   an extraction liquid flow path provided adjacent to the sample solution flow path across a separation membrane including a molecular imprinted membrane that selectively causes the target amino acid to permeate;
   a pair of electrodes provided sandwiching the sample solution flow path and the extraction liquid flow path; and
   a DC power supply that generates a predetermined potential difference between the pair of electrodes.
<2B> The amino acid separation device according to <1B>, wherein the molecular imprinted membrane is formed of a polymer including a molecular template having a three-dimensional structure complementary to a three-dimensional structure of the target amino acid.
<3B> The amino acid separation device according to <2B>, wherein the polymer is a polymer of a monomer having a functional group that interacts with the target amino acids.
<4B> The amino acid separation device according to <3B>, wherein the monomer is 2-(dimethylamino)ethyl methacrylate.
<5B> The amino acid separation device according to any one of <1B> to <4B>, wherein the target amino acid is any one selected from the group consisting of aspartic acid, threonine, serine, asparagine, glutamic acid, glutamine, glycine, alanine, citrulline, valine, cystine, methionine, isoleucine, leucine, tyrosine, phenylalanine, γ-aminobutyric acid, lysine, and histidine.
<6B> The amino acid separation device according to any one of <1B> to <5B>, wherein the target amino acid is any one selected from the group consisting of glutamic acid, valine, leucine, and methionine.
<7B> The amino acid separation device according to any one of <1B> to <6B>, wherein the separation membrane includes a base membrane and the molecular imprinted membrane covering one surface or both surfaces of the base membrane.
<8B> The amino acid separation device according to <7B>, wherein the base membrane is a dialysis membrane formed of cellulose or a cellulose derivative.
<9B> The amino acid separation device according to <7B> or <8B>, wherein the molecular imprinted membrane covering one surface or both surfaces of the base membrane has a multilayer structure.
<10B> The amino acid separation device according to any one of <1B> to <9B>, wherein each of the electrodes provided in the extraction liquid flow path is provided with an electrode diaphragm on a front surface thereof.

### Advantageous Effects of Invention

According to the present invention, an amino acid analysis system and an amino acid analysis method capable of continuously monitoring a target amino acid are provided. According to the present invention, there is also provided an amino acid separation device suitable for the amino acid analysis system.

### Brief Description of Drawings

FIG. 1 is a conceptual diagram of an amino acid analysis system of the present invention.
FIG. 2 is an explanatory view of separation of a target amino acid by an amino acid separation device according to the present invention.
FIG. 3 is a conceptual diagram of a separation membrane including a molecular imprinted membrane to be used in the amino acid separation device according to the present invention, in which (a) is a separation membrane formed of a molecular imprinted membrane (self-supporting membrane), (b) is a separation membrane in which a molecular imprinted membrane is laminated on one surface of a base membrane, and (c) is a separation membrane in which a molecular imprinted membrane is laminated on both surfaces of a base membrane.
FIG. 4 is a schematic view of a separation membrane (regenerated cellulose membrane covered with a molecular imprinted membrane on both surfaces) according to an example.
FIG. 5 is a conceptual perspective view of an amino acid separation device of Example 1.
FIG. 6 shows chromatograms of effluents from respective channels of the amino acid separation device of Example 1 (Sample: amino acid sample solution, Acceptor: extraction flow path, Donoer: sample flow path).
FIG. 7 shows results of HPLC analysis of sample solutions in channels of the amino acid separation device of Example 1 (Sample: amino acid sample solution, Acceptor: extraction flow path, Donoer: sample flow path).
FIG. 8 is a configuration diagram of an amino acid analysis system of Example 2 including an amino acid separation device.
FIG. 9 is a diagram showing the permeability of respective amino acids in amino acid separation devices using separation membranes having different numbers of layers (1 layer, 5 layers, and 10 layers) of a molecular imprinted membrane.
FIG. 10 is a configuration diagram of an amino acid analysis system of Example 3 including two amino acid separation devices connected in series.
FIG. 11 shows results of amino acid separation (target amino acid: glutamic acid) by the amino acid analysis system of Example 3.
FIG. 12 shows results of amino acid separation (target amino acid: valine) by an amino acid analysis system of Example 4.

### Reference Signs List

1 Amino acid separation device
2 Sample solution supply device
3 Extraction liquid supply device
3A Feed liquid supply device
4 Analyzer
5 DC power supply
10 Amino acid analysis system
11 Sample solution flow path
12 Separation membrane
13 Extraction liquid flow path
14a, 14b Electrode
15a, 15b Electrode diaphragm
16a, 16b Feed liquid supply flow path

### Description of Embodiments

Hereinafter, the present invention will be described in detail with reference to examples and the like, but the present invention is not limited to the examples and the like set forth below and the examples and the like can be freely modified and implemented without departing from the gist of the present invention. Dimensions, materials, other specific numerical values, and the like indicated in embodiments are merely examples for facilitating understanding of the invention, and should not be construed as limitation for the present invention unless otherwise noted.

In addition, in all the drawings, the same constituent elements are denoted by the same reference numerals, and description thereof will be omitted as appropriate.

As used herein, "from ... to ..." or "... to ..." is used as an expression including numerical values or physical quantities before and after the "to". Also, as used herein, the expression "A and/or B" includes "only A", "only B", and "both A and B".

The amino acid analysis system of the present invention is an amino acid analysis system for continuously detecting a target amino acid contained in a sample solution containing a plurality of amino acids, and includes: an amino acid separation device including a sample solution flow path through which the sample solution flows, an extraction liquid flow path provided adjacent to the sample solution flow path across a separation membrane including a molecular imprinted membrane that selectively causes the target amino acid to permeate, a pair of electrodes provided sandwiching the sample solution flow path and the extraction liquid flow path, and a DC power supply that generates a predetermined potential difference between the pair of electrodes; a sample solution supply device that supplies a sample solution to the sample solution flow path of the amino acid separation device; an extraction liquid supply device that supplies an extraction liquid to the extraction liquid flow path of the amino acid separation device; and an analyzer that continuously detects a target amino acid contained in an extraction liquid discharged through the extraction liquid flow path of the amino acid separation device.

The amino acid separation method of the present invention is an amino acid analysis method for continuously monitoring a target amino acid using the amino acid analysis system of the present invention.

The amino acid analysis system of the present invention is characterized by the separation membrane in the amino acid separation device which is a component of the system.

That is, the amino acid separation device according to the present invention is an amino acid separation device for use in the amino acid analysis system of the present invention, the amino acid separation device including:
a sample solution flow path through which the sample solution flows, an extraction liquid flow path provided adjacent to the sample solution flow path across a separation membrane including a molecular imprinted membrane that selectively causes the target amino acid to permeate, a pair of electrodes provided sandwiching the sample solution flow path and the extraction liquid flow path, and a DC power supply that generates a predetermined potential difference between the pair of electrodes.

In the present specification, the "molecular imprinted membrane" (MIM) means a membrane formed of a polymer (hereinafter, sometimes described as "base polymer") in which a target substance to be separated is used as a template molecule and a cavity complementary to the template molecule is formed.

In continuously monitoring a target amino acid using the amino acid analysis system of the present invention, a sample solution containing a plurality of amino acids flows through the sample solution flow path in the amino acid separation device according to the present invention, is accelerated under an electric field between the pair of electrodes provided sandwiching the sample solution flow path and the extraction liquid flow path, and is supplied to the separation membrane.

The "molecular imprinted membrane that selectively causes the target amino acid to permeate" is used as the separation membrane of the amino acid separation device, and thus only the target amino acid selectively permeates the separation membrane and is taken out into the extraction liquid in the extraction liquid flow path. Furthermore, the target amino acid is accelerated by the electric field between the electrodes, and thus the target amino acid in the sample solution can be forcibly moved toward the extraction liquid flow path by the electric field. Accordingly, even in a case where the target amino acid is at a low concentration, the target amino acid can be continuously extracted into the extraction liquid flow path. The target amino acid extracted into the extraction liquid flow path can be continuously monitored by an analyzer (monitoring device) provided at a subsequent stage of the extraction liquid flow path.

In the amino acid analysis system of the present invention, the target amino acid is selectively extracted by the amino acid separation device including the separation membrane. Thus, when an amino acid is reacted with a derivatization reagent that reacts with an amino group or a carboxyl group of the amino acid to form an amino acid derivative, a fluorescence detector or a UV detector (UV-vis detector) can be used as an analyzer of the amino acid analysis system of the present invention (a fluorescence detector when the amino acid derivative has fluorescence, and a UV detector when the amino acid derivative has a UV absorption property).

Note that the analyzer of the amino acid analysis system of the present invention is only required to be any device capable of continuously monitoring the target amino acid, and an instrument capable of continuously detecting the target amino acid as it is (for example, a mass spectrometer) can also be used.

The derivatization reagent is not limited as long as it can react with an amino acid to produce a derivative having fluorescence or a UV absorption property, and for example, ortho-phthalaldehyde (OPA), dabcyl chloride (DABS-Cl), or the like can be used.

As another monitoring means, an amino acid analyzer using a reagent (for example, ninhydrin) which causes a color reaction with an amino acid can also be used.

In the amino acid analysis method using the amino acid analysis system of the present invention, unlike a method by chromatography, several tens of types of components cannot be detected simultaneously from one sample, but only the target amino acid can be measured rapidly and continuously. In addition, the present method is advantageous in that detection can be performed without pretreatment and person-hours required for analysis can be greatly reduced.

Hereinafter, the amino acid analysis system of the present invention will be described in more detail.

### Amino Acid Separation Device

The amino acid separation device according to the present invention is an amino acid separation device to be used in the amino acid analysis system of the present invention, and includes a sample solution flow path through which a sample solution containing a plurality of amino acids flows, an extraction liquid flow path provided adjacent to the sample solution flow path across a separation membrane including a molecular imprinted membrane that selectively causes the target amino acid to permeate, a pair of electrodes provided sandwiching the sample solution flow path and the extraction liquid flow path, and a DC power supply that generates a predetermined potential difference between the pair of electrodes.

The separation membrane according to the present invention includes a molecular imprinted membrane that selectively causes a target amino acid to permeate, and thus can selectively cause only the target amino acid to permeate therethrough.

The molecular imprinted membrane in the present invention uses a target amino acid to be measured as a template molecule, and is formed of a base polymer including a molecular template having a three-dimensional structure complementary to the three-dimensional structure of the target amino acid. That is, the molecular imprinted membrane in the present invention is a membrane formed of a polymer in which a target amino acid to be separated (to be measured) is used as a template molecule and a cavity complementary to the template molecule is formed.

The method for preparing the molecular imprinted membrane in the present invention is not limited as long as the objects of the present invention are not impaired, and examples thereof include a method in which a monomer of a base polymer of a molecular imprinted membrane is polymerized in the presence of a target amino acid (template molecule) and the target amino acid is eluted from the obtained polymer, and by this method, it is possible to obtain a molecular imprinted membrane formed of a polymer including a molecular template having a three-dimensional structure complementary to the three-dimensional structure of the target amino acid.

The base polymer is not particularly limited as long as the objects of the present invention are not impaired, but typically, a polymer obtained by polymerizing a monomer having a functional group that interacts with the target amino acid is used. When the base polymer is a polymer of such a monomer, the base polymer has a site that interacts with a target amino acid in a polymerization unit derived from the functional group of the monomer, and thus various amino acids can be used as template molecules.

The target amino acid has a carboxyl group which is an acidic group and an amino group which is a basic group in the molecule, and thus the functional group that interacts with the target amino acid in the monomer of the base polymer may be either a basic group or an acidic group. Examples thereof include monomers having an amino group which is a basic group and a substituted amino group thereof, and monomers having a sulfuric acid group, a nitric acid group, a carboxyl group, and a phosphoric acid group which are acidic groups.

Examples of the monomer for the base polymer include acrylic acid, methacrylic acid, itaconic acid, vinylphenylboronic acid, and acrylamidoboronic acid, each of which has a functional group that interacts with the target amino acid.

Among these, methacrylic acid having an amino group and a substituted amino group thereof can be suitably used, and specific examples thereof include 2-(dimethylamino)ethyl methacrylate used in Examples.

A ratio of the monomer and the template molecule (target amino acid) in polymerizing the base polymer is set within a range in which the obtained molecular imprinted membrane maintains mechanical strength as a membrane and the target amino acid can permeate under a voltage application condition, and only need be appropriately determined in consideration of the types of the monomer and the template molecule (target amino acid) to be used, the form of the separation membrane (self-supporting membrane, supported membrane), and the like.

The target amino acid is an amino acid to be measured.

The target amino acid is arbitrary as long as it can form a molecular imprinted membrane as a template molecule, and is not particularly limited, but examples thereof include any one selected from the group consisting of aspartic acid, threonine, serine, asparagine, glutamic acid, glutamine, glycine, alanine, citrulline, valine, cystine, methionine, isoleucine, leucine, tyrosine, phenylalanine, γ-aminobutyric acid, lysine, and histidine.

Among these, a suitable target amino acid is any one selected from the group consisting of glutamic acid, valine, leucine, and methionine.

A suitable example of the target amino acid is glutamic acid. As shown in the examples described below, when an amino acid separation device and an amino acid separation system including a molecular imprinted membrane using glutamic acid as a template molecule is used, glutamic acid (target amino acid) can be selectively separated and detected from an amino acid-mixed solution containing a plurality of amino acids.

Another suitable example of the target amino acid is valine. As shown in the example described below, when an amino acid separation device and an amino acid separation system including a molecular imprinted membrane using valine as a template molecule is used, valine (target amino acid) can be selectively separated and detected from an amino acid-mixed solution containing a plurality of amino acids.

The separation membrane in the present invention may be a self-supporting membrane consisting only of the molecular imprinted membrane, but preferably has a structure in which the molecular imprinted membrane is supported by a base membrane. With such a structure, the molecular imprinted membrane can be made thinner, and sufficient strength of the separation membrane can be ensured.

Details will be described in the embodiment of the present invention described below.

That is, a suitable aspect of the separation membrane according to the present invention is a separation membrane including a base membrane and a molecular imprinted membrane that selectively causes a target amino acid to permeate, one surface or both surfaces of the base membrane being covered with the molecular imprinted membrane that selectively causes the target amino acid to permeate.

The base membrane is a membrane having a communication hole through which the target amino acid can permeate, and usually has a large number of holes, each of which has a size to the extent that not only the target amino acid but also other amino acids can permeate.

When the base membrane and the molecular imprinted membrane are combined, the target amino acid can be selectively caused to permeate while maintaining the mechanical strength and the structural stability of the separation membrane as a whole.

The base membrane is selected from those that do not inhibit permeation of the target amino acid and have sufficient mechanical strength and thermal and electrical stability, and is preferably a dialysis membrane. As used herein, the "dialysis membrane" refers to a membrane that is electrically neutral and can perform separation depending on a size of a molecule, and a so-called cation exchange membrane and a so-called anion exchange membrane do not correspond to the dialysis membrane in the present invention.

As a material of the dialysis membrane, cellulose or a cellulose derivative is preferable. Examples of cellulose constituting the cellulose dialysis membrane include natural cellulose, regenerated cellulose, and semisynthetic cellulose obtained by modifying pure cellulose such as cellulose acetate. The cellulose dialysis membrane may be a membrane using two or more types of these celluloses.

The molecular weight cut-off (MWCO) of the dialysis membrane is set within a range that does not impair the objects of the present invention, and is usually from 100 to 15000.

In a case where the separation membrane is a supported membrane, the molecular imprinted membrane is only required to cover one surface or both surfaces of the base membrane.

In the case where the separation membrane is a supported membrane, the molecular imprinted membrane may have a multilayer structure. A molecular imprinted membrane having a plurality of layers (e.g., about from 2 to 20 layers) can be formed by repeatedly forming the molecular imprinted membrane.

In the amino acid separation device of the present invention, an electrode diaphragm is preferably provided in front of each of the electrodes provided in the extraction liquid flow path.

In the amino acid separation device of the present invention, a voltage is applied between the electrodes to promote extraction of the target amino acid to be measured. In a case where the applied voltage exceeds the electrolysis voltage of water as a solvent, oxygen is generated on the positive electrode side and hydrogen is generated on the negative electrode side by electrolysis of water. When these gases are introduced into the analyzer in the subsequent stage together with the extraction liquid, the gases may cause a decrease in analysis accuracy or device trouble.

Here, when an electrode diaphragm is provided in front of each of the electrodes provided in the extraction liquid flow path, it is possible to avoid mixing of the gases resulting from the electrolysis into the extraction liquid, and thus, analysis in the subsequent stage becomes more accurate and can be easily performed.

As the electrode diaphragm, a membrane through which the target amino acid and the gases resulting from the electrolysis do not permeate is used, and an ion exchange membrane or a bipolar membrane can be used.

In the amino acid analysis system of the present invention, one amino acid separation device may be used, or two or more amino acid separation devices may be connected in series and used. The selectivity of the target amino acid is further improved by performing multistage extraction using two or more amino acid separation devices connected in series.

Hereinafter, suitable embodiments of the present invention will be described with reference to the drawings.

Note that the present invention is not limited to the embodiments described below and the embodiments can be arbitrarily modified and implemented without departing from the gist of the present invention. Dimensions, materials, other specific numerical values, and the like indicated in the embodiments are merely examples for facilitating understanding of the invention, and should not be construed as limitation for the present invention unless otherwise noted. In addition, in all the drawings, the same constituent elements are denoted by the same reference numerals, and description thereof will be omitted as appropriate.

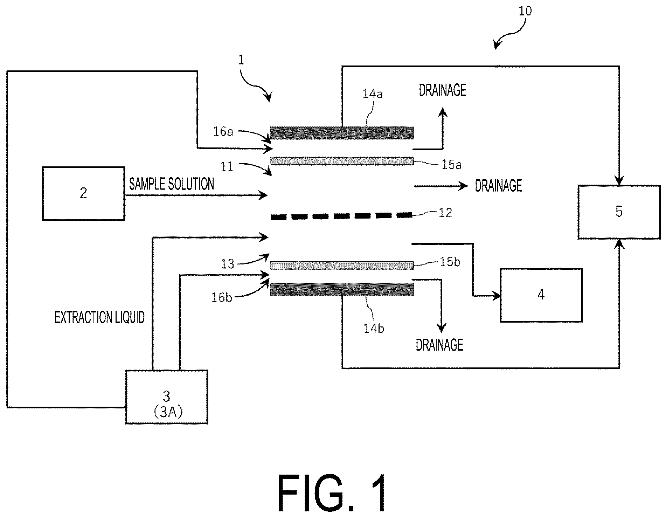

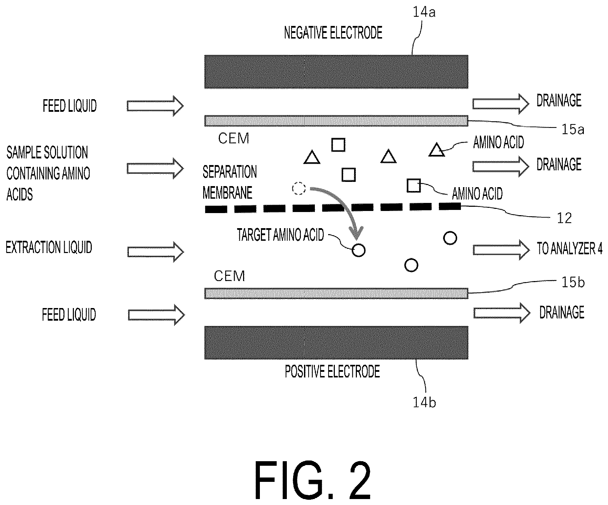

FIG. 1 illustrates a conceptual diagram of an amino acid analysis system 10 according to an embodiment of the present invention. FIG. 2 illustrates an explanatory view of separation of a target amino acid by an amino acid separation device 1 according to the present invention.

FIG. 1 is the conceptual diagram of the amino acid analysis system 10 according to the embodiment of the present invention.

As illustrated in FIG. 1, the amino acid analysis system 10 includes, as main parts, the amino acid separation device 1, a sample solution supply device 2 that supplies a sample solution containing a plurality of amino acids to the amino acid separation device 1, an extraction liquid supply device 3 that supplies an extraction liquid to the amino acid separation device 1, a feed liquid supply device 3A that supplies a feed liquid, and an analyzer 4 that analyzes amino acids contained in the extraction liquid discharged from the amino acid separation device 1.

The amino acid separation device 1 has a laminated flat plate structure including an electrode 14a, a feed liquid supply flow path 16a, an electrode diaphragm 15a, a sample solution flow path 11, a separation membrane 12, an extraction liquid flow path 13, an electrode diaphragm 15b, a feed liquid supply flow path 16b, and an electrode 14b. The amino acid separation device 1 is connected to the DC power supply 5 that generates a predetermined potential between the electrodes 14a and 14b.

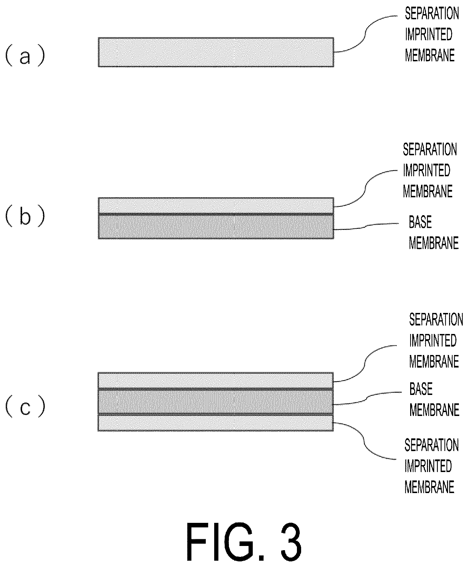

FIG. 3 illustrates a conceptual diagram of the separation membrane 12 used in the amino acid separation device 1. The separation membrane 12 is a separation membrane including a molecular imprinted membrane that selectively causes a target amino acid to permeate. As the separation membrane 12, a separation membrane (FIG. 3(a)) formed of a molecular imprinted membrane (self-supporting membrane), a separation membrane (FIG. 3(b)) in which a molecular imprinted membrane is laminated on one surface of a base membrane, or a separation membrane (FIG. 3(c)) in which a molecular imprinted membrane is laminated on both surfaces of a base membrane can be selected. The detail of the separation membrane 12 is as described above, and thus description thereof will be omitted.

In the amino acid separation device 1 having the above structure, the electrode 14a is a negative electrode, the electrode 14b is a positive electrode, and a cation exchange membrane (CEM) is used for each of the electrode diaphragms 15a and 15b.

The feed liquid supply flow path 16a (16b) is a flow path provided between the electrode 14a (14b) and the electrode diaphragm 15a (15b), and by circulating the feed liquid in this flow path, it is possible to wash away H⁺, OH⁻, hydrogen gas, and oxygen gas generated by electrolysis caused by the voltage application between the electrodes 14a and 14b.

In the present embodiment, a buffer solution having a pH at which a target amino acid to be separated is present as an anion is used for a sample solution containing a plurality of amino acids. Thus, the sample solution cannot permeate through the cation exchange membrane (CEM) as the electrode diaphragms 15a and 15b.

Note that in contrast to the present embodiment, in a case where a buffer solution having a pH at which the target amino acid to be separated is a cation is used, an anion exchange membrane (AEM) is used for the electrode diaphragms 15a and 15b.

Hereinafter, the separation of amino acids by the amino acid separation device 1 will be described with reference to FIG. 2.

First, the DC power supply 5 is connected in such a manner that the electrode 14a is a negative electrode and the electrode 14b is a positive electrode. Then, a sample solution containing a plurality of amino acids to be measured is supplied to the sample solution flow path 11 at a predetermined flow rate, an extraction liquid (for example, a phosphate buffer) is supplied to the extraction liquid flow path 13, and a feed liquid (for example, an inorganic acid aqueous solution) is supplied to the feed liquid supply flow paths 16a and 16b. Then, a potential gradient is formed between the electrodes 14a and 14b by applying a predetermined voltage between the electrodes 14a and 14b.

In the amino acid analysis system of the present invention, the sample solution supply device 2, the extraction liquid supply device 3, and the feed liquid supply device 3A are not particularly limited, and a known liquid feeding pump suitable for a liquid feeding rate can be used. Note that as illustrated in FIG. 1, the extraction liquid supply device 3 and the feed liquid supply device 3A are integrated in the present embodiment, but they may be independent from each other.

The target amino acid in the sample solution flowing through the sample solution flow path 11 is an anion, and thus is attracted to the electrode 14b (positive electrode). However, the separation membrane 12 is provided with a molecular imprinted membrane having a template corresponding to the target amino acid, and thus the target amino acid is adsorbed to the molecular imprinted membrane, permeates through the inside of the molecular imprinted membrane by the potential difference, and is selectively extracted into the extraction liquid flow path 13 through the separation membrane 12. On the other hand, amino acids other than the target amino acid cannot permeate through the molecular imprinted membrane of the separation membrane 12, and are discharged to the outside as they are.

The voltage applied between the electrodes 14a and 14b serves as a driving force for the movement of the target amino acid, is set within a range in which the target amino acid moves through the separation membrane 12 at a significant speed, and is usually from about 15 V to 40 V, although it depends on the type of the target amino acid, the configuration of the separation membrane 12, the thickness of the separation membrane (particularly, the thickness of the molecular imprinted membrane), and the like.

In addition, the permeation rate of the target amino acid can be controlled by adjusting the applied voltage, and thus the amount of the target amino acid to be extracted into the extraction liquid flow path 13 can also be controlled.

Note that in a case where no voltage is applied between the electrodes 14a and 14b, the target amino acid is adsorbed to the molecular imprinted membrane, but the driving force for permeating through the molecular imprinted membrane is insufficient, which makes it impossible for the target amino acid to permeate through the separation membrane 12.

The extraction liquid containing the target amino acid discharged from the extraction liquid flow path 13 is supplied to the analyzer 4 in the subsequent stage and measured. In the present embodiment, a UV detector is used for the analyzer 4, and the target amino acid is bound to a derivatization reagent to form an amino acid derivative in a stage before the analyzer 4, whereby the target amino acid can be continuously monitored.

Note that in a case where continuous monitoring is not performed, the analyzer 4 is optional, and an analyzer capable of analyzing the type of the target amino acid to be measured can be appropriately selected. Specific examples thereof include an ion chromatograph, an ICP emission spectrometer, and a mass spectrometer.

The embodiment of the present invention has been described above, but the embodiment disclosed herein is illustrative in all respects and is not restrictive. In particular, in the embodiment disclosed herein, items that are not explicitly disclosed do not depart from the scope of usual practice by those skilled in the art, and a value that can be easily assumed by those skilled in the art can be employed.

### Examples

Hereinafter, the present invention will be described more specifically with reference to Examples, but the present invention is not limited thereto. Note that amino acids may be abbreviated.

### 1. Preparation of Separation Membrane and Amino Acid Analysis System

### 1-1. Production of Separation Membranes A to C (Template Molecule: Glutamic Acid)

A separation membrane formed of a regenerated cellulose membrane (base membrane) covered with a molecular imprinted membrane (template molecule: glutamic acid) on both surfaces was prepared by the following procedure.

### 1) Pretreatment of Base Membrane

A regenerated cellulose membrane (available from Spectrum Laboratories Inc., Spectra/Por (trade name), molecular weight cutoff 1 kDa) was used as a base membrane. The base membrane was cut into a piece of 20 mm wide and 95 mm long, immersed in ultrapure water for 30 minutes, immersed in a 5% aqueous sodium hydroxide solution for 2 hours to remove sodium azide and a protecting agent of the membrane, and repeatedly washed with ultrapure water until the pH of the washing solution became neutral.

### 2) Silanization Treatment

The pretreated regenerated cellulose membrane was placed in 100 mL of 1.56% acetone solution of (3-aminopropyl)trimethoxysilane (APTMS), and reacted at 50°C for 24 hours while stirring. The membrane after the reaction was repeatedly washed with ultrapure water to remove the reaction solution. This reaction introduced an amino group to the membrane surface.

### 3) Formation of Molecular Imprinted Membrane by Surface Graft Reaction

A molecular imprinted membrane using glutamic acid as a template molecule was formed on both surfaces of the regenerated cellulose membrane (base membrane) after the silanization treatment by a surface graft reaction.

A monomer for forming a base polymer, a template molecule (corresponding to the target amino acid), and 2-(dimethylamino)ethyl methacrylate (DMAEMA) (3.7 mL), L-glutamic acid (0.93 g), and N,N'-methylenebis(acrylamide) (MBA) (0.30 g) as reaction initiators were placed in a 1 : 1 mixed solution (70 mL) of dimethylformamide (DMF) and water, and the pH of the resulting mixture was adjusted to 12 with a 0.1 M aqueous sodium hydroxide solution. The silanized regenerated cellulose membrane (base membrane) was placed in the solution after the adjustment, and the mixture was stirred at room temperature for 2 hours. Thereafter, the mixture was heated to 50°C under a nitrogen atmosphere and reacted for 30 minutes. Thereafter, 35 mg of ammonium persulfate was added thereto to prepare a reaction solution.

The silanized regenerated cellulose membrane (base membrane) was impregnated with an aqueous ammonium persulfate solution (100 mg/20 mL) for 5 minutes in advance, then impregnated with the reaction solution, and heated at 50°C to be reacted until the solution was completely evaporated, thereby forming a graft polymer membrane on both surfaces of the base membrane.

The graft polymer membrane after the reaction was repeatedly washed with ultrapure water, and then glutamic acid as the template molecule was removed with a 10 mM aqueous sodium hydroxide solution. Thereafter, the molecular imprinted membrane was dried at 40°C for 3 hours, thereby preparing a separation membrane (separation membrane A) in which the molecular imprinted membrane using glutamic acid as the template molecule was formed on both surfaces of the regenerated cellulose membrane (base membrane) after the silanization treatment.

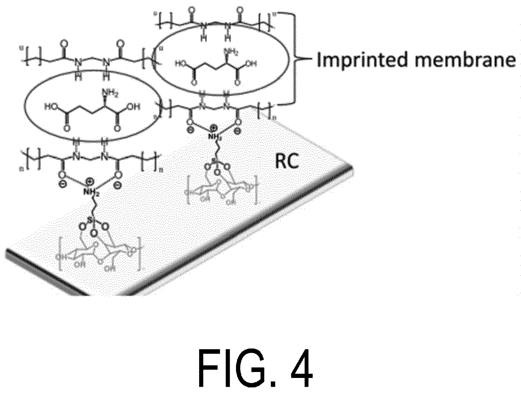

FIG. 4 illustrates a schematic view of the obtained separation membrane (molecular imprinted membrane, regenerated cellulose membrane (RC)).

In addition to the separation membrane (separation membrane A) of the example in which the number of layers of the molecular imprinted membrane was one, the formation of the graft polymer membrane by the surface graft reaction was repeated to prepare a separation membrane (separation membrane B) in which the number of layers of the molecular imprinted membrane was five and a separation membrane (separation membrane C) in which the number of layers of the molecular imprinted membrane was ten.

### 1-2. Production of Separation Membrane D (Template Molecule: Valine)

A separation membrane formed of a regenerated cellulose membrane (base membrane) covered with a molecular imprinted membrane (template molecule: valine) on both surfaces was prepared by the following procedure.

### 1) Pretreatment of Base Membrane

Pretreatment was performed in the same procedure as in 1) Pretreatment of Base Membrane in the above-described 1-1. Production of Separation Membrane (Template Molecule: Glutamic Acid).

### 2) Silanization Treatment

The silanization treatment was performed in the same procedure as in 2) Silanization Treatment in the above-described 1-1. Production of Separation Membrane (Template Molecule: Glutamic Acid).

### 3) Formation of Molecular Imprinted Membrane by Surface Graft Reaction

A molecular imprinted membrane using valine as a template molecule was formed on both surfaces of the regenerated cellulose membrane (base membrane) after the silanization treatment by a surface graft reaction.

A separation membrane (separation membrane D) having a molecular imprinted membrane (one layer) using valine as a template molecule formed on both surfaces thereof was prepared in the same procedure as in 3) Formation of Molecular Imprinted Membrane by Surface Graft Reaction in the above-described 1-1. Production of Separation Membrane (Template Molecule: Glutamic Acid) except that the template molecule (corresponding to the target amino acid) was changed from glutamic acid to valine (1.05 g).

### Amino Acid Analysis System

An analysis experiment of a target amino acid contained in a sample solution was performed using the amino acid analysis system 10 according to the configuration illustrated in FIG. 1.

The configuration of the amino acid separation device 1 in the amino acid analysis system 10 actually used is as follows.

As the separation membrane of the amino acid separation device 1, a separation membrane formed of a regenerated cellulose membrane (base membrane) having both surfaces covered with the above-described molecular imprinted membrane (template molecule: glutamic acid) was used.

### "Amino Acid Separation Device 1"

Electrodes 14a, 14b (negative electrode, positive electrode): platinum mesh
Separation membrane 12: separation membranes A to D described above
Electrode diaphragms 15a, 15b: cation exchange membrane (SELEMION (trade name) CMV available from AGC Engineering, Co., Ltd., thickness: 130 µm)

The sample solution flow path 11, the extraction liquid flow path 13, and the feed liquid supply flow paths 16a and 16b of the amino acid separation device 1 having the above configuration have the following dimensions.
Sample solution flow path 11: 5 mm wide, 40 mm long, 127 µm thick
Extraction liquid flow path 13: 5 mm wide, 40 mm long, 127 µm thick
Feed liquid supply flow paths 16a, 16b: 5 mm wide, 40 mm long, 127 µm thick

As the configuration other than the amino acid separation device 1 in the amino acid analysis system 10, peristaltic pumps available from Tokyo Rikakikai Co., Ltd. were used for the sample solution supply device 2 and the extraction liquid supply device 3. As the analyzer 4, HPLC or a UV detector was used depending on the evaluation.

### 2. Evaluation

### (Evaluation 2-1) One amino acid separation device, separation imprinted membrane (template molecule: Glu, one layer)

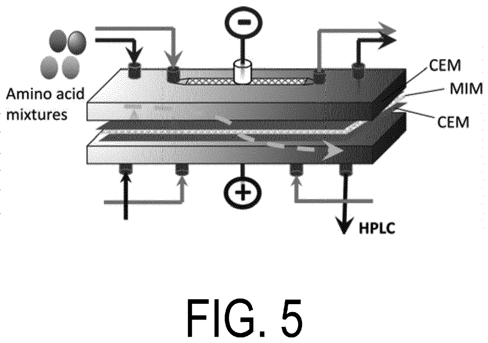

In Evaluation 2-1, the amino acid analysis system of Example 1 including the amino acid separation device illustrated in FIG. 5 was used. In Evaluation 2-1, HPLC was used as the analyzer.

As the sample solution, an amino acid-mixed solution composed of a phosphate buffer (pH 8) containing the following four amino acids at 75 µM each was used.
- Glutamic acid (Glu): molecular weight 89.10, isoelectric point pI 3.22
- Valine (Val): molecular weight 117.15, isoelectric point pI 5.96
- Phenylalanine (Phe): molecular weight 165.19, isoelectric point pI 5.48
- Arginine (Arg): molecular weight 174.20, isoelectric point pI 10.76

First, a voltage was applied between the electrodes 14a and 14b from the DC power supply 5 (applied voltage: 30 V) in a state where the amino acid-mixed solution was caused to flow through the sample solution flow path 11 under a condition of a flow rate of 1.0 mL/min, and an HNO₃ aqueous solution was caused to flow through the extraction liquid flow path 13 and the feed liquid supply flow paths 16a and 16b under conditions of flow rates of 0.25 mL/min and 3 mL/min, respectively. The introduced sample solution and the extraction liquid were collected at the outlet of the device, and the amino acids contained in the respective effluents were evaluated by HPLC which is the analyzer 4.

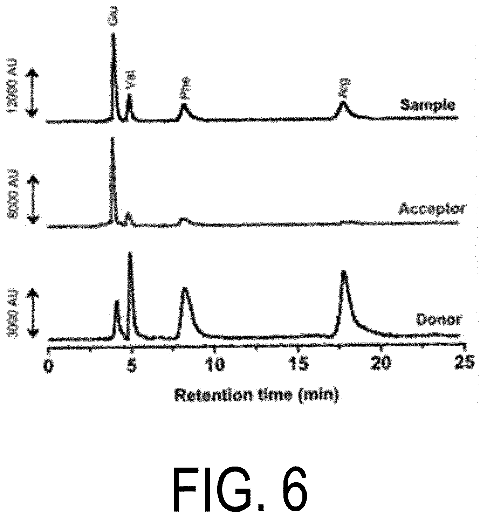

FIG. 6 shows chromatograms of amino acids in the sample solution (Sample) containing four amino acids, an extraction liquid (Acceptor) discharged from the extraction liquid flow path 13, and a sample solution drainage (Donoer) discharged from the sample solution flow path 11, which were analyzed by HPLC.

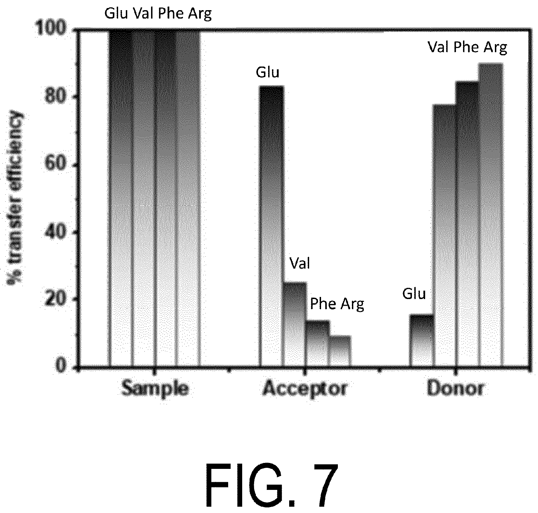

FIG. 7 shows the permeation efficiencies (relative values to the sample solution (Sample)) calculated from the chromatograms of FIG. 6.

As shown in FIGS. 6 and 7, in comparison with the sample solution (Sample), the amino acids (Val, Phe, and Arg) other than Glu are present in a large proportion in the sample solution drainage (Donoer), whereas Glu is present in a large proportion in the extraction liquid (Acceptor). From this, it was determined that Glu, which was the target amino acid, selectively permeated (permeation efficiency: about 80%) into the extraction liquid through the separation membrane provided with the molecular imprinted membrane (template molecule: Glu).

### (Evaluation 2-2): One amino acid separation device, separation imprinted membrane (1 layer, 5 layers, 10 layers)

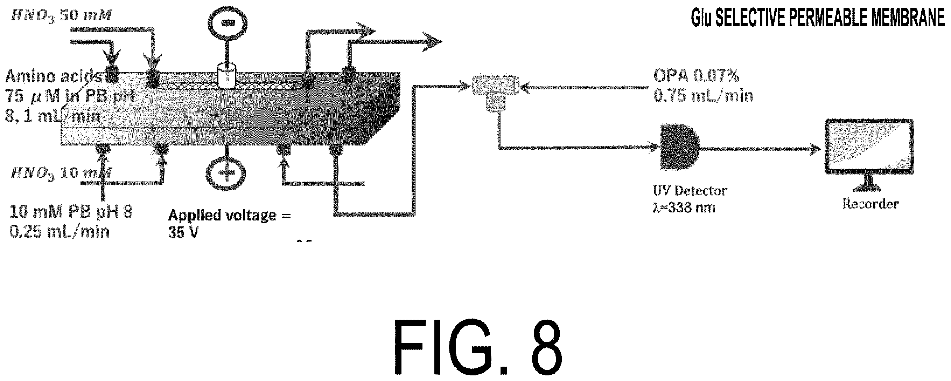

FIG. 8 illustrates a configuration diagram of an amino acid analysis system of Example 2 including an amino acid separation device used in Evaluation 2-2. In the evaluation, a UV detector was used as the analyzer.

In Evaluation 2-2, three types of separation membranes having different numbers of layers of the molecular imprinted membrane described above were used as the separation membrane to be used in the amino acid separation device.
- Separation membrane A: one layer of molecular imprinted membrane (both surfaces)
- Separation membrane B: 5 layers of molecular imprinted membrane (both surfaces)
- Separation membrane C: 10 layers of molecular imprinted membrane (both surfaces)

As the sample solution, an amino acid-mixed solution composed of a phosphate buffer (pH 8) containing the following five amino acids at 75 µM each was used.
- Glutamic acid (Glu): molecular weight 89.10, isoelectric point pI 3.22
- Aspartic acid (Asp): molecular weight 133.11, isoelectric point pI 2.77
- Phenylalanine (Phe): molecular weight 165.19, isoelectric point pI 5.48
- Proline (Pro): molecular weight 115.13, isoelectric point pI 6.30
- Histidine (His): molecular weight 155.16, isoelectric point pI 6.00

First, a voltage was applied between the electrodes 14a and 14b from the DC power supply 5 (applied voltage: 35 V) in a state where the amino acid solution was caused to flow through the sample solution flow path 11 under a condition of a flow rate of 1 mL/min, a phosphate buffer (pH 8) was caused to flow through the extraction liquid flow path 13 under a condition of 0.25 mL/min, an HNO₃ aqueous solution (50 mM) was caused to flow through the feed liquid supply flow path 16a under a condition of 3 mL/min, and an HNO₃ aqueous solution (10 mM) was caused to flow through the feed liquid supply flow path 16b under a condition of 3 mL/min. The introduced sample solution and the extraction liquid were collected at the outlet of the device, and the amino acids contained in the respective effluents were derivatized with ortho-phthalaldehyde (OPA) and then evaluated by a UV detector which was the analyzer 4.

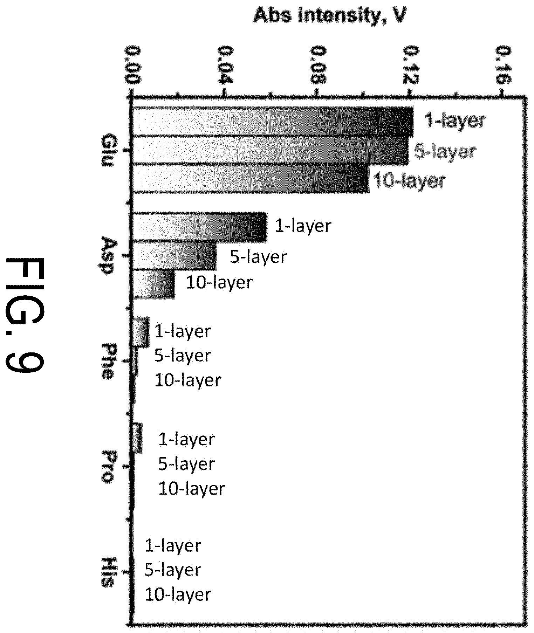

FIG. 9 shows the permeability of amino acids in the amino acid separation devices using the separation membranes A to C (the number of layers of the molecular imprinted membrane: 1 layer, 5 layers, and 10 layers).

As shown in FIG. 9, it is found that proportions of other amino acids (Asp, Phe, Pro, His) relative to Glu decrease when the number of layers of the molecular imprinted membrane (template molecule: Glu) formed on the separation membrane increases.

In particular, in the separation membrane C having 10 layers of the molecular imprinted membrane, when Glu was taken as 100%, the results were Asp 18%, Phe 1%, Pro 0.7%, and His 0.7%.

### (Evaluation 2-3): two amino acid separation devices, separation membrane B (molecular imprinted membrane (both surfaces), five layers)

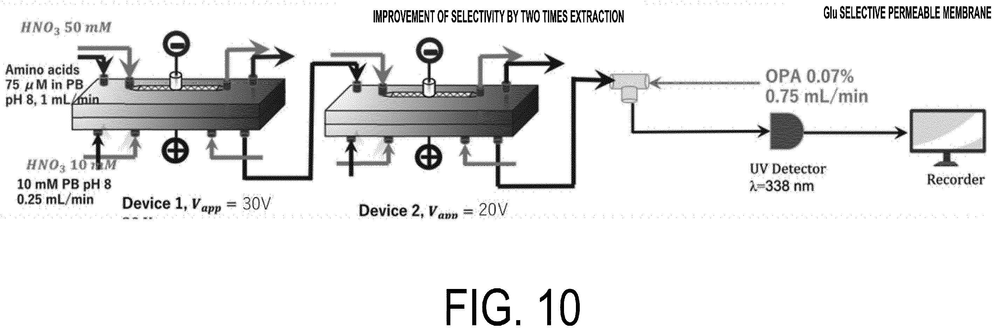

FIG. 10 illustrates a configuration diagram of an amino acid analysis system of Example 3 including an amino acid separation device used in Evaluation 2-3. In the evaluation, a UV detector was used as the analyzer.

In Evaluation 2-3, two amino acid separation devices were connected in series and used. Note that the separation membrane used was the separation membrane B (molecular imprinted membrane (both surfaces) 5 layers).

As illustrated in FIG. 10, the evaluation was performed under the same conditions as in Evaluation 2-2 except that the voltage applied to the amino acid separation device (device 1) in the previous stage was 30 V and the voltage applied in the subsequent stage was 20 V.

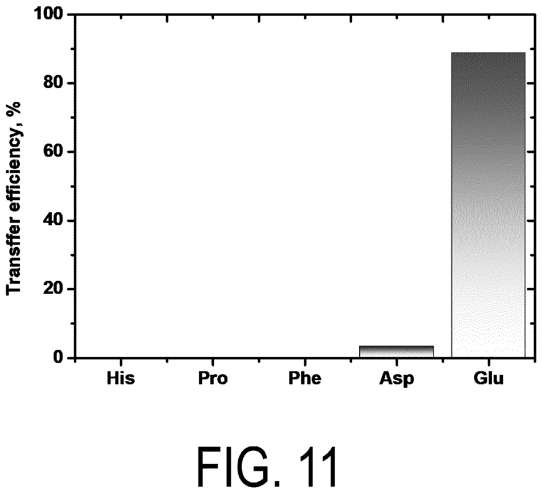

FIG. 11 shows the relationship between proportions of amino acids in the extraction liquid in the amino acid analysis system including two amino acid separation devices.

The results were Asp 4%, Phe 0%, Pro 0%, and His 0% when Glu was taken as 100%, and it was confirmed that the selectivity of Glu was further improved as compared with one amino acid separation device (Evaluation 2-2).

### (Evaluation 2-4) One amino acid separation device, separation imprinted membrane (template molecule: valine (Val))

An analyzer having the same configuration as that of the amino acid analysis system of Example 2 described above was used except that the separation membrane D (template molecule: valine (Val)) was used as the amino acid separation membrane. In the evaluation, HPLC was used as the analyzer.
- Separation membrane D: one layer of molecular imprinted membrane (both surfaces)

As the sample solution, an amino acid-mixed solution composed of a 10 mM NaOH buffer containing the following three types of amino acids at 1 mM each was used.
- Valine (Val): molecular weight 117.15, isoelectric point pI 5.96
- Leucine (Leu): molecular weight 131.17, isoelectric point pI 5.98
- Isoleucine (Ile): molecular weight 131.17, isoelectric point pI 6.02

First, a voltage was applied between the electrodes 14a and 14b from the DC power supply 5 (applied voltage: 40 V) in a state where the amino acid solution was caused to flow through the sample solution flow path 11 under a condition of a flow rate of 1 mL/min, an NaOH solution (10 mM) was caused to flow through the extraction liquid flow path 13 under a condition of 0.3 mL/min, an HNO₃ aqueous solution (50 mM) was caused to flow through the feed liquid supply flow path 16a under a condition of 2 mL/min, and an HNO₃ aqueous solution (10 mM) was caused to flow through the feed liquid supply flow path 16b under a condition of 2 mL/min. The introduced sample solution and extraction liquid were collected at the outlet of the device, derivatized with ortho-phthalaldehyde (OPA), and then evaluated by HPLC which was the analyzer 4.

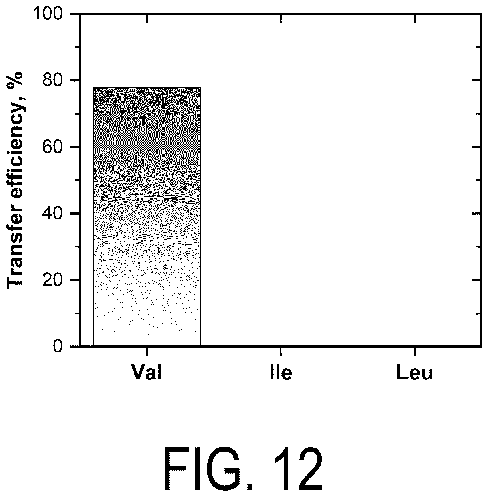

FIG. 12 shows the evaluation results of amino acid separation in the amino acid separation device using the separation membrane D.

The extraction rate of valine was 78%, and the extraction rates of leucine and isoleucine were < 1%. From this result, it was confirmed that valine can be selectively extracted from an amino acid-mixed solution by the amino acid separation device using the separation membrane D.

## Claims

1. An amino acid analysis system for continuously detecting a target amino acid contained in a sample solution containing a plurality of amino acids, the amino acid analysis system comprising:
an amino acid separation device including
a sample solution flow path through which the sample solution flows,
an extraction liquid flow path provided adjacent to the sample solution flow path across a separation membrane including a molecular imprinted membrane that selectively causes the target amino acid to permeate,
a pair of electrodes provided sandwiching the sample solution flow path and the extraction liquid flow path, and
a DC power supply that generates a predetermined potential difference between the pair of electrodes;
a sample solution supply device that supplies a sample solution to the sample solution flow path of the amino acid separation device;
an extraction liquid supply device that supplies an extraction liquid to the extraction liquid flow path of the amino acid separation device; and
an analyzer that continuously detects a target amino acid contained in the extraction liquid discharged through the extraction liquid flow path of the amino acid separation device.

2. The amino acid analysis system according to claim 1, wherein the molecular imprinted membrane comprises a polymer including a molecular template having a three-dimensional structure complementary to a three-dimensional structure of the target amino acid.

3. The amino acid analysis system according to claim 2, wherein the polymer is a polymer of a monomer having a functional group that interacts with the target amino acid.

4. The amino acid analysis system according to claim 3, wherein the monomer is 2-(dimethylamino)ethyl methacrylate.

5. The amino acid analysis system according to any one of claims 1 to 4, wherein the target amino acid is any one selected from the group consisting of aspartic acid, threonine, serine, asparagine, glutamic acid, glutamine, glycine, alanine, citrulline, valine, cystine, methionine, isoleucine, leucine, tyrosine, phenylalanine, γ-aminobutyric acid, lysine, and histidine.

6. The amino acid analysis system according to any one of claims 1 to 5, wherein the target amino acid is any one selected from the group consisting of glutamic acid, valine, leucine, and methionine.

7. The amino acid analysis system according to any one of claims 1 to 6, wherein the separation membrane comprises a base membrane and the molecular imprinted membrane covering one surface or both surfaces of the base membrane.

8. The amino acid analysis system according to claim 7, wherein the base membrane is a dialysis membrane formed of cellulose or a cellulose derivative.

9. The amino acid analysis system according to claim 7 or 8, wherein the molecular imprinted membrane covering one surface or both surfaces of the base membrane has a multilayer structure.

10. The amino acid analysis system according to any one of claims 1 to 9, wherein each of the pair of electrodes is provided with an electrode diaphragm on a front surface thereof.

11. The amino acid analysis system according to any one of claims 1 to 10, wherein two or more of the amino acid separation devices are connected in series.

12. An amino acid analysis method, comprising continuously monitoring a target amino acid using the amino acid analysis system described in any one of claims 1 to 11.
